# EUROPEAN PATENT APPLICATION

(11) **EP 4 090 060 A2**
(43) Date of publication of application: **16.11.2022**
(21) Application number: 22171438.9
(22) Date of filing: 03.05.2022
(51) Int. Cl.: H04W 8/00, H04W 24/02, H04W 48/18, H04W 88/14

(54) **NETWORK SLICE ADMISSION CONTROL (NSAC) DISCOVERY AND ROAMING ENHANCEMENTS**

(30) Priority: 10.05.2021 US 202163201705 P; 22.04.2022 US 202217660234
(71) Applicant: Apple Inc., Cupertino CA 95014 (US)
(72) Inventor: KISS, Krisztian, Cupertino, California (US); PRABHAKAR, Alosious Pradeep, Cupertino, California (US); VENKATARAMAN, Vijay, Cupertino, California (US)
(74) Representative: Simmons & Simmons

(57) **Abstract**

An access and mobility management function (AMF) of a 5G core network configured to transmit a network function registration request to a network resource function (NRF), receiving a response to the network function registration request from the NRF, transmit a network function discovery request to the NRF, the network function discovery request including one or more single network slice selection assistance information (S-NSSAI) and an indication that the discovery request is for a network slice admission control function (NSACF) and receive a network function discovery response from the NRF, wherein the network function discovery response includes a NSACF address.

## Description

### BACKGROUND

A network may deploy multiple network slices. Generally, a network slice refers to an end-to-end logical network that is configured to provide a particular service and/or possesses particular network characteristics. Each network slice may be isolated from one another but run on a shared network infrastructure. Thus, each network slice may share network resources but facilitate different functionality.

A network operator may want to limit the number of devices registered to a particular network slice. The network may be equipped with a network slice admission control function (NSACF) to perform this task. For example, the NSACF may perform various operations related to managing the number of UEs and/or sessions registered to an individual network slice.

### SUMMARY

Some exemplary embodiments are related to an access and mobility management function (AMF) of a 5G core network configured to perform operations. The operations include transmitting a network function registration request to a network resource function (NRF), receiving a response to the network function registration request from the NRF, transmitting a network function discovery request to the NRF, the network function discovery request including one or more single network slice selection assistance information (S-NSSAI) and an indication that the discovery request is for a network slice admission control function (NSACF) and receiving a network function discovery response from the NRF, wherein the network function discovery response includes a NSACF address.

Other exemplary embodiments are related to a network slice admission control function (NSACF) of a 5G core network configured to perform operations. The operations include transmitting a network function registration request to a network resource function (NRF), receiving a response to the network function registration request from the NRF, transmitting a network function discovery request to the NRF, the network function discovery request including one or more single network slice selection assistance information (S-NSSAI) and an indication that the discovery request is for an access and mobility management function (AMF) and receiving a network function discovery response from the NRF.

Still further exemplary embodiments are related to a network slice admission control function (NSACF) of a 5G core network configured to perform operations. The operations include maintaining a network slice quota for one or more network slices, wherein the NSACF is configured to enforce network slice admission control (NSAC) for both a visiting public land mobile network (VPLMN) and a home public land mobile network (HPLMN), receiving a number of registered user equipment (UEs) per network slice availability check and update request from an access and mobility management function (AMF) and transmitting a response to the AMF, the response indicating whether a maximum number of registered UEs or sessions for the S-NSSAI has been reached.

### BRIEF DESCRIPTION OF THE DRAWINGS

Fig. 1 shows an exemplary network arrangement according to various exemplary embodiments.
Fig. 2 shows an exemplary network architecture according to various exemplary embodiments.
Fig. 3 shows a signaling diagram for a network slice admission control function (NSACF) discovery procedure according to various exemplary embodiments.
Fig. 4 shows a signaling diagram for an access and mobility management function (AMF) discovery procedure according to various exemplary embodiments.
Fig. 5 shows a table that illustrates an example of the exemplary information that may be included in by a network resource function (NRF) in a discovery response transmitted to the NSACF during an AMF discovery procedure according to various exemplary embodiments.
Fig. 6 shows a signaling diagram for an early admission control (EAC) update procedure according to various exemplary embodiments.
Fig. 7 shows an example of a local-breakout (LBO) roaming scenario according to various exemplary embodiments.
Fig. 8 shows an example of a home-routed roaming scenario according to various exemplary embodiments.
Fig. 9 shows a signaling diagram for a number of user equipment (UEs) per network slice availability check and update procedure according to various exemplary embodiments.
Fig. 10 shows an exemplary UE according to various exemplary embodiments.
Fig. 11 shows an exemplary base station according to various exemplary embodiments.

### DETAILED DESCRIPTION

The exemplary embodiments may be further understood with reference to the following description and the related appended drawings, wherein like elements are provided with the same reference numerals. The exemplary embodiments relate to network slice admission control (NSAC). Those skilled in the art will understand that NSAC generally refers to third generation partnership (3GPP) protocols and policies that allow a network operator to control the number of devices and/or sessions registered to a particular network slice.

The exemplary embodiments are described with regard to a fifth generation (5G) network that supports network slicing. Generally, network slicing refers to a network architecture in which multiple end-to-end logical networks run on a shared physical network infrastructure. Each network slice may be configured to provide a particular set of capabilities and/or characteristics. Thus, the physical infrastructure of the 5G network may be sliced into multiple virtual networks, each configured for a different purpose. Throughout this description, reference to a network slice may represent any type of end-to-end logical network that is configured to serve a particular purpose and implemented on the 5G physical infrastructure.

Those skilled in the art will understand that 5G may support a variety of different use cases, e.g., enhanced mobile broadband (eMBB), enhanced machine type communication (eMTC), industrial internet of things (IIoT), etc. Each type of use case may relate to various different types of applications and/or services. A network slice may be characterized by a type of use case, a type of application and/or service or the entity that provides the application and/or service via the network slice. However, any example in this description that characterizes a network slice in a specific manner is only provided for illustrative purposes. Throughout this description, reference to a network slice may represent any type of end-to-end logical network that is configured to serve a particular purpose and implemented on the 5G physical infrastructure.

A network slice may be identified by single network slice selection assistance information (S-NSSAI). Each instance of S-NSSAI may be associated with a public land mobile network (PLMN) and may include the slice service type (SST) and a slice descriptor (SD). The SST may identify the expected behavior of the corresponding network slice with regard to services, features and characteristics. Those skilled in the art will understand that the SST may be associated with a standardized SST value. The SD may identify any one or more entities associated with the network slice. For example, the SD may indicate an owner or an entity that manages the network slice (e.g., carrier) and/or the entity that the is providing the application/service via the network slice (e.g., a third-party, the entity that provides the application or service, etc.). In some embodiments, the same entity may own the slice and provide the service (e.g., carrier services). Throughout this description, S-NSSAI refers to a single network slice and the terms "NSSAI" or "S-NSSAIs" may be used interchangeably to refer to one or more network slices.

A user equipment (UE) may be configured to perform any of a wide variety of different tasks. Thus, the UE may be configured to utilize one or more network slices. To provide an example, the UE may utilize a first network slice for one or more carrier services (e.g., voice, multimedia messaging service (MMS), Internet, etc.) and a second different network slice for a third-party service. However, the configured purpose of a network slice is beyond the scope of the exemplary embodiments. The exemplary embodiments are not limited to any particular type of network slice. Instead, the exemplary embodiments introduce enhancements related to NSAC.

The exemplary embodiments are also described with regard to a network slice admission control function (NSACF). The NSACF refers to a network function that is configured to control and restrict the number of UEs and/or packet data unit (PDU) sessions registered to a particular network slice. To provide an example, the NSACF may perform various operations related to enforcing a quota for a maximum number of UEs registered to a particular network slice (e.g., S-NSSAI). A NSACF service area is related to the location of the network function consumer. However, reference to the term NSACF is merely provided for illustrative purposes. Different networks may refer to a similar concept by a different name, for example, 3GPP networks may use the terms NSACF and network slice quota function (NSQ) interchangeably.

In one aspect, the exemplary embodiments relate to NSAC discovery and early admission control (EAC). As will be described in more detail below, the exemplary embodiments include enhancements for a NSACF discovery procedure initiated by an access and mobility management function (AMF), enhancements for an AMF discovery procedure initiated by the NSACF and enhancements for an EAC update procedure between the AMF and the NSACF. In another aspect, the exemplary embodiments relate to NSAC within the context of a roaming scenario. As will be described in more detail below, the exemplary embodiments include enhancements for a NSACF deployed by a visited public land mobile network (VPLMN) and a NSACF deployed by a home public land mobile network (HPLMN). The exemplary enhancements described here may be used in conjunction with currently implemented NSAC protocols and policies or future implementations of NSAC protocols and policies.

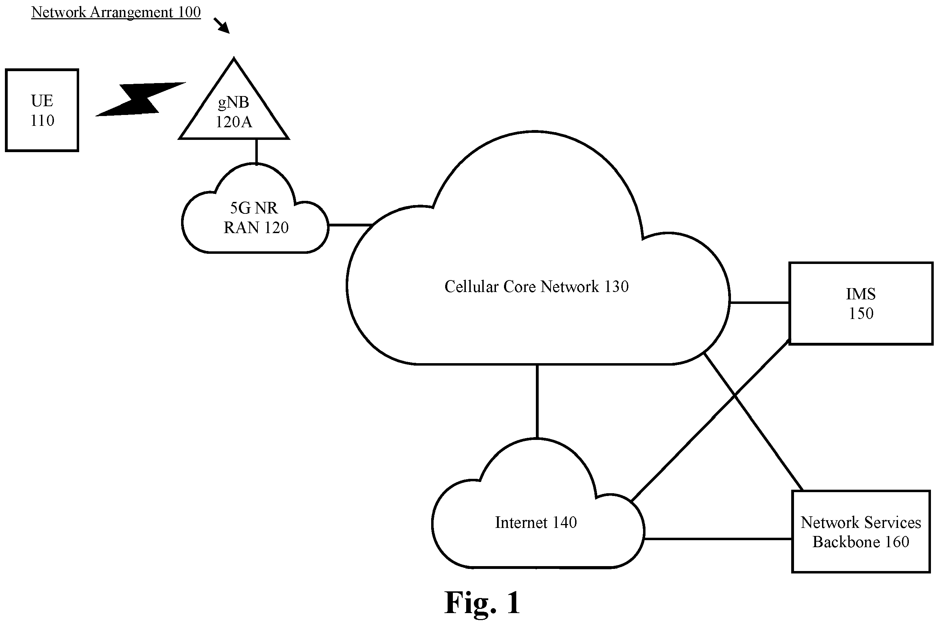

Fig. 1 shows an exemplary network arrangement 100 according to various exemplary embodiments. The exemplary network arrangement 100 includes the UE 110. Those skilled in the art will understand that the UE 110 may be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network arrangement 100, the network with which the UE 110 may wirelessly communicate is a 5G new radio (NR) radio access network (RAN) 120. However, the UE 110 may also communicate with other types of networks (e.g., 5G cloud RAN, a next generation RAN (NG-RAN), long term evolution (LTE) RAN, a legacy cellular network, a wireless local area network (WLAN), etc.) and the UE 110 may also communicate with networks over a wired connection. Therefore, in this example, the UE 110 may have a 5G NR chipset to communicate with the 5G NR RAN 120.

The 5G NR RAN 120 may be a portion of a cellular network that may be deployed by cellular providers (e.g., Verizon, AT&T, T-Mobile, etc.). The 5G NR RAN 120 may include, for example, cells or base stations (Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set. In network arrangement 100, the 5G NR RAN 120 is shown with a gNB 120A. However, an actual network arrangement may include any number of different types of base stations or cells deployed by any number of RANs. Thus, the example of a single 5G NR RAN 120 and a single gNB 120A is merely provided for illustrative purposes.

Those skilled in the art will understand that any association procedure may be performed for the UE 110 to connect to the 5G NR RAN 120. For example, as discussed above, the 5G NR RAN 120 may be associated with a particular network carrier where the UE 110 and/or the user thereof has a contract and credential information (e.g., stored on a SIM card). Upon detecting the presence of the 5G NR RAN 120, the UE 110 may transmit the corresponding credential information to associate with the 5G NR RAN 120. More specifically, the UE 110 may associate with a specific base station or cell (e.g., gNB 120A).

The network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network. It may include the evolved packet core (EPC) and/or the 5G core (5GC). The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

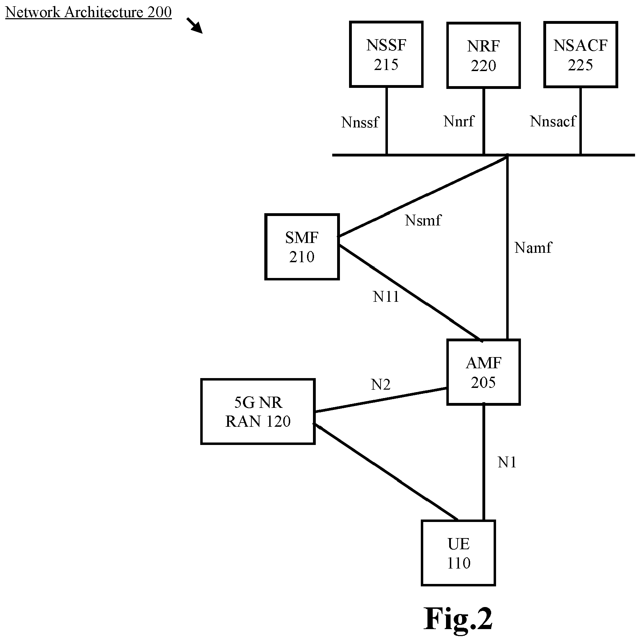

Fig. 2 shows an exemplary network architecture 200 according to various exemplary embodiments. The following description will provide a general overview of the various components of the exemplary architecture 200. The specific operations performed by the components with respect to the exemplary embodiments will be described in greater detail after the description of the architecture 200.

Those skilled in the art will understand that the components of the exemplary architecture 200 may reside in various physical and/or virtual locations relative to the network arrangement 100 of Fig. 1. These locations may include, within the access network (e.g., RANs 120), within the core network 130, as separate components outside of the locations described with respect to Fig. 1, etc.

In Fig. 2, the various components are shown as being connected via connections labeled Nx (e.g., N1, N2, N11, Nsmf, Namf, Nnssf, Nnrf, Nnsacf, etc.). Those skilled in the art will understand that each of these connections (or interfaces) are defined in the 3GPP Specifications. The exemplary architecture 200 is using these connections in the manner in which they are defined in the 3GPP Specifications. Furthermore, while these interfaces are termed connections throughout this description, it should be understood that these interfaces are not required to be direct wired or wireless connections, e.g., the interfaces may communicate via intervening hardware and/or software components. To provide an example, the UE 110 may exchange signals over the air with the cell 120A. However, in the architecture 200 the UE 110 is shown as having a connection to the AMF 205. This connection or interface is not a direct communication link between the UE 110 and the AMF 205, but is a connection that is facilitated by intervening hardware and software components. Thus, throughout this description the terms "connection" and "interface" may be used interchangeably to describe the Nx interface between the various components.

The architecture 200 includes the UE 110 and the 5G NR RAN 120. The UE 110 and the 5G NR RAN 120 are connected to the AMF 205. The AMF 205 is generally responsible for connection and mobility management in the 5G NR RAN 120. For example, the AMF 205 may perform operations related to registration procedure management between the UE 110 and the core network 130. The exemplary embodiments are not limited to an AMF that performs the above reference operations. Those skilled in the art will understand the variety of different types of operations an AMF may perform. Further, reference to a single AMF 205 is merely for illustrative purposes, an actual network arrangement may include any appropriate number of AMFs.

The AMF 205 is connected to the session management function (SMF) 210. The SMF 210 may perform operations related to session management such as, but not limited to, session establishment, session release, IP address allocation, policy and quality of service (QoS) enforcement, etc. The exemplary embodiments are not limited to an SMF that performs the above reference operations. Those skilled in the art will understand the variety of different types of operations a SMF may perform. Further, reference to a single SMF 210 is merely for illustrative purposes, an actual network arrangement may include any appropriate number of SMFs.

The AMF 205 and the SMF 210 are also connected to the network slice selection function (NSSF) 215, the network resource function (NRF) 220 and the NSACF 225. The NSSF 215 performs operations related to network slicing. For example, the NSSF 215 may select a set of network slice instances serving the UE 110. The NSSF 215 may also manage one or more databases that include a mapping table of S-NSSAI and the frequency bands in which the S-NSSAI is allowed to operate. The NRF 220 may perform operations related to network service discovery functionality which allows network functions to determine where and how to access other network functions. However, reference to the term network resource function is merely provided for illustrative purposes. Different networks may refer to a similar entity by a different name, for example, 3GPP networks may use the terms network resource function and network repository function interchangeably.

The NSACF 225 may be configured to perform operations related to controlling the number of UEs and/or sessions registered per network slice for network slices that are subject to NSAC. During operation, the NSACF 225 may check a count of registered UEs and/or PDU sessions with the S-NSSAI and determine whether the network slice quota has been reached. The NSACF 225 may then accept or reject the register request based on the count and the quota. However, reference to a quota concept is merely provided for illustrative purposes. Those skilled in the art will understand that different entities may refer to similar concepts by a different name. For example, 3GPP networks may use the terms quota and admission control to refer to the same concept. Further, reference to a single NSACF 225 is merely for illustrative purposes, an actual network arrangement may include any appropriate number of NSACFs.

To provide a more specific example, the NSACF 225 may be configured with a maximum number of PDU session per network slice that are allowed to be served by multiple network slices that are subject to NSAC. During operation, the SMF 210 may be triggered to send a request to the NSACF 225 for a maximum number of PDU sessions per network slice admission control during PDU session establishment/release procedures. The NSACF 225 may control (e.g., increase, decrease, etc.) the current number of PDU sessions per network slice such that it does not exceed the maximum number of PDU sessions allowed to be served by that network slice. When the current number of PDU sessions with the network slice is to be increased, the NSACF 225 may check whether the maximum number of PDU sessions per network slice for that network slice has already been reached. The NSACF 225 may then accept or reject the request based on the count and the quota.

To provide another example, the NSACF 225 may be configured with a maximum number of UEs per network slice which are allowed to be served by each network slice that is subject to NSAC. During operation, the AMF 205 may be triggered to send a request to the NSACF 225 for a maximum number of UEs per network slice admission control when the UE's registration status for a network slice subject to NSAC may change. The registration status may change during procedures such as, but not limited to, a UE registration procedure, a UE deregistration procedure, a network slice-specific authentication and authorization procedure, an authentication authorization and accounting (AAA) server triggered network slice-specific re-authorization and re-authorization procedure and a AAA server triggered slice-specific authorization revocation. As indicated above, the NSACF 225 may control (e.g., increase, decrease, etc.) the current number of UEs registered with a network slice such that it does not exceed the maximum number of UEs allowed to register with that slice. The NSACF 225 may also maintain a list of UE IDs registered with a network slice that is subject to NSAC. When the current number of UEs registered with a network slice is to be increased, the NSACF 225 may first check whether the UE identity is already in the list of UEs registered with that network slice. If not, the NSACF 225 may check whether the maximum number of UEs per network slice for that particular network slice has already been reached. The NSACF 225 may then accept or reject the request based on the count and the quota.

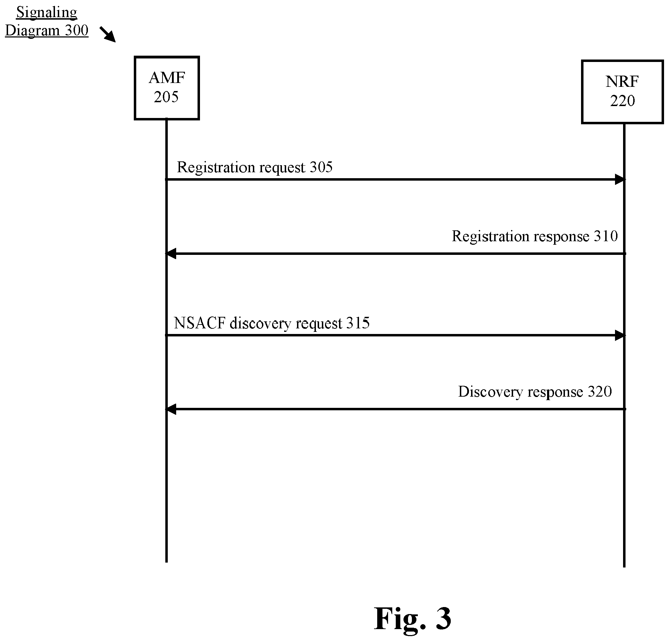

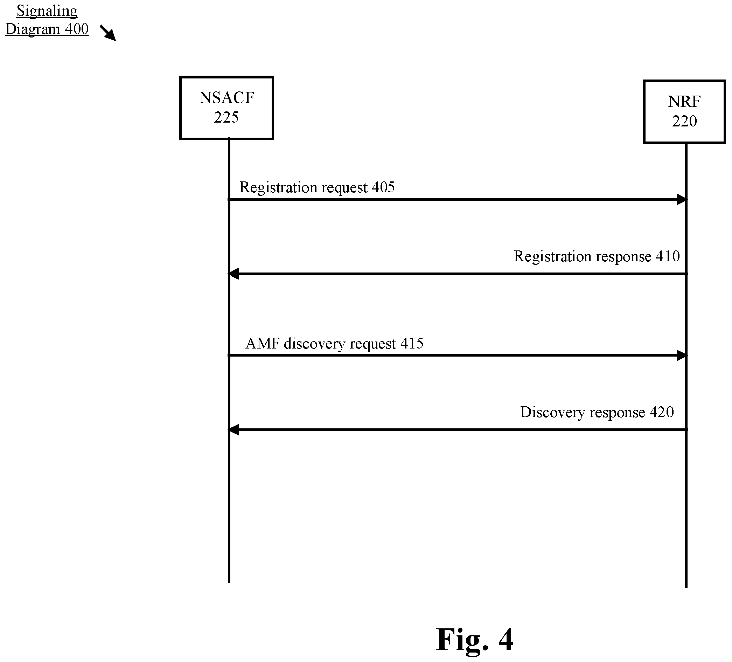

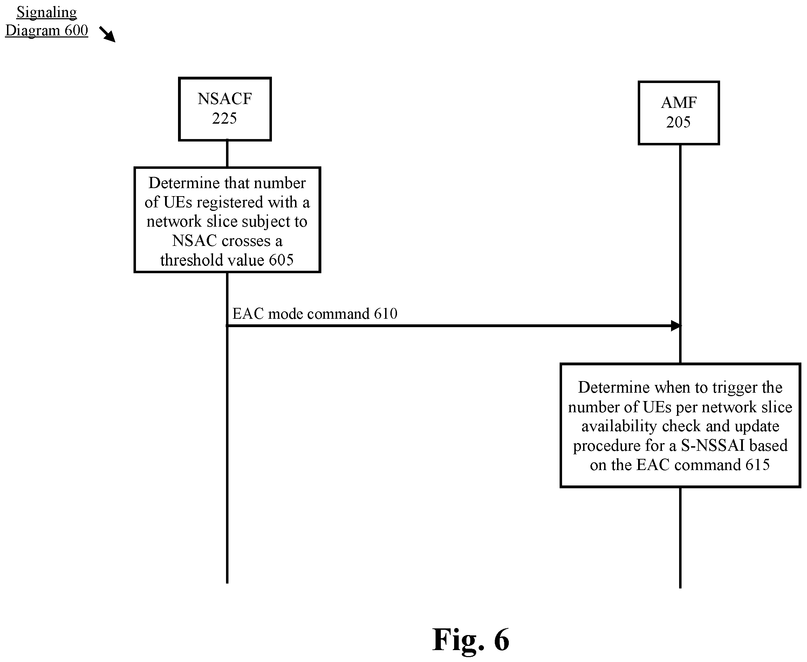

Various exemplary enhancements related to NSAC discovery will be described in detail below. Initially, enhancements for a NSACF discovery procedure initiated by the AMF 205 will be described with regard to the signaling diagram 300 of Fig. 3. After, an exemplary AMF discovery procedure initiated by the NSACF 225 will be described with regard to the signaling diagram 400 of Fig. 4. Subsequently, an exemplary EAC update procedure between the AMF 205 and the NSACF 225 will be described with regard to the signaling diagram 600 of Fig. 6. The exemplary AMF discovery procedure may provide the basis for the enhancements introduced for the exemplary EAC update procedure.

Fig. 3 shows a signaling diagram 300 for a NSACF discovery procedure according to various exemplary embodiments. The signaling diagram 300 will be described with regard to the network architecture 200 and include the AMF 205 and the NRF 220.

The NSACF discovery procedure may be initiated by the AMF 205. In 305, the AMF 205 may transmit a network function registration request to the NRF 220. For example, the network function registration request may be transmitted by the AMF 205 to the NRF 220 over the Namf and/or Nnrf interfaces shown in Fig. 2. This request may be referred to as a "Nnrf_NFManagement_NFRegister_Request" and may include one or more globally unique AMF IDs (GUAMIs) and a list of S-NSSAI(s) supported by the AMF 205. Thus, when the consumer of Nnrf_NFManagement_NFRegister service is the AMF 205, the AMF 205 may include the list of S-NSSAI(s) the AMF 205 supports in the Nnrf_NFManagement_NFRegister operation.

Under conventional circumstances, the list of S-NSSAI(s) supported by the AMF 205 is not provided to the NRF 220. As will be described in more detail below with regard to Fig. 4, this exemplary enhancement allows the NRF 220 to know the S-NSSAI supported by this particular AMF 205. Thus, the NRF 220 is able to provide a list of S-NSSAI supported the AMF 205 to the NSACF 225 in an AMF discovery procedure.

In 310, the NRF 220 may transmit a response to the network function registration request to the AMF 205. This response may indicate whether or not the registration request was successful. For example, this response may be transmitted by the NRF 220 to the AMF 205 over the Nnrf and/or Namf interfaces shown in Fig. 2. This request may be referred to as a "Nnrf_NFManagement_NFRegister_Response" and comprise a result (e.g., successful, failure, etc.). In this example, it is assumed that the registration attempt is successful.

In 315, the AMF 205 may transmit a discovery request to the NRF 220. For example, the discovery request may be transmitted by the AMF 205 to the NRF 220 over the Nnrf and/or Namf interfaces shown in Fig. 2. This request may be referred to as a "Nnrf_NFDiscovery_Request" and may include S-NSSAI(s) and an indication that the discovery request is for a NSACF. Thus, if the target network function of the Nnrf_NFDiscovery service is an NSACF, the discovery request may include S-NSSAI(s).

In 320, the NRF 220 may transmit a discovery response to the AMF 205. For example, the discovery response may be transmitted by the NRF 220 to the AMF 205 over the Nnrf and/or Namf interfaces shown in Fig. 2. This response may be referred to as a "Nnrf_NFDiscovery_Response" and may include an address for the NSACF 225. In addition, this response may include the other S-NSSAI(s) supported by the NSACF 225. Thus, if the target network function of the Nnrf_NFDiscovery service is the NSACF 225, the discovery response may include the list of S-NSSAI(s) for which the NSACF 225 manages admission control.

Under conventional circumstances, the other S-NSSAI(s) supported by the NSACF 225 are not provided to the AMF 205 during the discovery procedure. Thus, the AMF 205 may only be aware of a NSACF corresponding to a particular S-NSSAI when that particular S-NSSAI is provided to the NRF 220 in the discovery request and the corresponding NSACF address is provided in the response.

The exemplary embodiments incorporate the other S-NSSAI(s) supported by the NSACF 225 in the discovery response in an attempt to reduce the number of subsequent discovery requests that may transmitted by the AMF 205. For example, the AMF 205 may use the information of the other S-NSSAI(s) supported by the NSACF 225 received in 320 to determine that requested NSSAI in a registration request from the UE 110 contains an S-NSSAI subject to access control for which the AMF 205 has not previously performed a NSACF discovery procedure. In other words, since the AMF 205 knows the other S-NSSAI(s) supported by the NSACF 225, the AMF 205 may use the information received in 320 instead of transmitting a subsequent discovery request to the NRF 220. This allows the AMF 205 to move onto the next step of the registration process (e.g., request NSACF 225 to check whether quota is available for another UE/session, transmit a context request to the SMF 210 or any other appropriate operation) without transmitting the discovery request to the NRF 220.

Fig. 4 shows a signaling diagram 400 for an AMF discovery procedure according to various exemplary embodiments. The signaling diagram 400 will be described with regard to the network architecture 200 and include the NSACF 225 and the NRF 220.

The AMF discovery procedure may be initiated by the NSACF 225. In 405, the NSACF 225 may transmit a network function registration request to the NRF 220. For example, the network function registration request may be transmitted by the NSACF 225 to the NRF 220 over the Nnsacf and/or Nnrf interfaces shown in Fig. 2. This request may be referred to as a "Nnrf_NFManagement_NFRegister_Request" and may include a list of S-NSSAI(s) supported by the NSACF 225. Thus, when the consumer of Nnrf_NFManagement_NFRegister service is the NSACF 335, the NSACF 225 may include the list of S-NSSAI(s) for which the NSACF 225 manages access control in the Nnrf_NFManagement_NFRegister operation.

Under conventional circumstances, the list of S-NSSAI(s) supported by the NSACF 225 is not provided to the NRF 220. This exemplary enhancement allows the NRF 220 to know the S-NSSAI supported by this particular NSACF 225. Thus, as shown in the signaling diagram 300, the NRF 220 is able to provide a list of S-NSSAI supported the NSACF 225 to the AMF 205 in the NSACF discovery procedure. Accordingly, in some embodiments, the exemplary enhancement referenced above with regard to 320 of the signaling diagram 300 may be enabled by this message in 405.

In 410, the NRF 220 may transmit a response to the network function registration request to the NSACF 225. This response may indicate whether or not the registration request was successful. For example, this response may be transmitted by the NRF 220 to the NSACF 225 over the Nnrf and/or Nnsacf interfaces shown in Fig. 2. This request may be referred to as a "Nnrf_NFManagement_NFRegister_Response" and comprise a result (e.g., successful, failure, etc.). In this example, it is assumed that the registration attempt is successful.

In 415, the NSACF 225 may transmit a discovery request to the NRF 220. For example, the discovery request may be transmitted by the NSACF 225 to the NRF 220 over the Nnrf and/or Nnsacf interfaces shown in Fig. 2. This request may be referred to as a "Nnrf_NFDiscovery_Request" and may include S-NSSAI(s) and an indication that the discovery request is for a AMF 205.

In 420, the NRF 220 may transmit a discovery response to the NSACF 225. For example, the discovery response may be transmitted by the NRF 220 to the NSACF 225 over the Nnrf and/or Nnsacf interfaces shown in Fig. 2. This response may be referred to as a "Nnrf_NFDiscovery_Response" and may include a list of one or more AMFs, their corresponding GUAMI(s) and the S-NSSAI(s) supported by each AMF. Thus, if the target network function of the Nnrf_NFDiscovery service is the AMF 205, the discovery response may include a list of GUAMI(s), a list of GUAMI(s) for which is can server as backup and the S-NSSAI(s) the AMF 205 supports.

It should be understood that the methods 300, 400 of Figs 3 and 4, respectively may be related to each other and that the various operations of these methods may be performed in any order. For example, in some exemplary embodiments, the NSACF registration operations 405 and 410 of method 400 may be performed. After the NSACF registration is complete, the method 300 may be performed by the AMF. Thus, in this example, the NSACF registration operations are precursors to the AMF operations of Fig. 3. In other exemplary embodiments, other orders of the operations of methods 300 and 400 may be used.

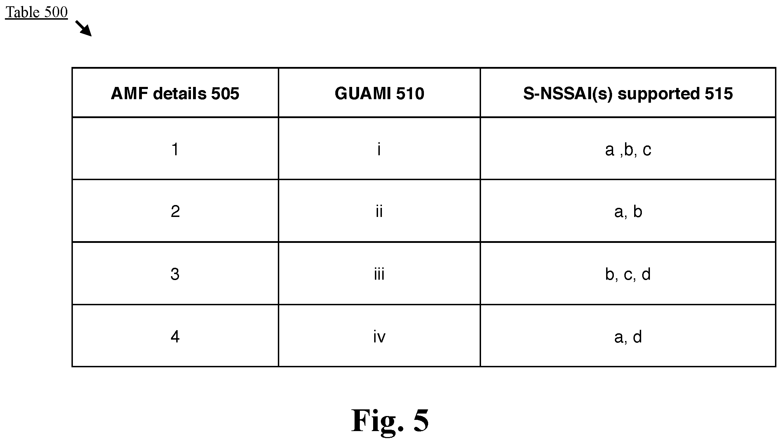

Fig. 5 shows a table 500 that illustrates an example of the exemplary information that may be included in by a NRF in a discovery response transmitted to the NSACF during an AMF discovery procedure. In this example, the table includes column 505 for AMF details, column 510 for the corresponding GUAMI and column 515 for the list of S-NSSAI(s) supported by the corresponding GUAMI. This column may be used as a look up table by the NSACF 225 to find the appropriate AMF for the EAC update procedure.

Under conventional circumstances, the list of one or more AMFs, their corresponding GUAMI(s) and the S-NSSAI(s) supported by each AMF is not provided to the NSACF 225. In some embodiments, this exemplary enhancement may be enabled by the exemplary enhancement introduced in 305 of the signaling diagram 300 where the AMF 205 provides include GUAMI(s) and a list of S-NSSAI(s) supported by the AMF 205 during the NSACF discovery procedure.

The signaling diagram 400 introduces the NSACF as a consumer for some NRF services and operations. Specifically, the NSACF 225 was shown as being a consumer for Nnrf_NFmanagement services, e.g., the NFRegister request and response operations. In addition, the NSACF 225 was shown as being a consumer for Nnrf_NFDiscovery services, e.g., the NFDiscovery request and response operations. Accordingly, although not shown in the signaling diagram 400, the NSACF 225 may also be a consumer of the Nnrf_NFmanagement services "NFupdate" request/response operations and a consumer of the "NFDeregister" request/response operations.

In addition, the exemplary enhancement shown in 420 may provide the basis for exemplary enhancements introduced for the EAC update procedure. The EAC update procedure indicates to the AMF 204 the activation or deactivation of the EAC mode for the S-NSSAI subject to NSAC. Those skilled in the art will understand that the EAC mode of the S-NSSAI may control whether the AMF 205 is required to perform a network slice availability check and update procedure before the S-NSSAI is considered an allowed S-NSSAI of the UE 110.

Fig. 6 shows a signaling diagram 600 for an exemplary EAC update procedure according to various exemplary embodiments. The signaling diagram 600 will be described with regard to the network architecture 200 and include the NSACF 225 and the AMF 205.

In 605, the NSACF 225 determines that a number of UEs (or sessions) registered with a network slice subject to NSAC crosses a threshold value. This threshold value indicates whether EAC mode for the S-NSSAI is to be activated or deactivated.

In 610, the NSACF 225 transmits an EAC mode activation or deactivation command to the AMF 205. For example, the determination in 605 may trigger the NSACF 225 to transmit a message that include one or more S-NSSAI and an EAC flag for each S-NSSAI. The EAC flag for an S-NSSAI may be set to activated if the number of UEs registered with the network slice is above the threshold value. Alternatively, the EAC flag for the S-NSSAI may be set to deactivated if the number of UEs registered with the network slice is below the threshold value. This message may be referred to as a "Nnsacf_NumberOfUEsPerSliceEACnotify" message.

It has been identified that, under conventional circumstances, the NSACF 225 may be unable to determine which of the AMFs deployed by the network is to be notified when the threshold value is reached. The exemplary enhancements described above with regard to the signaling diagrams 300-400 may provide a solution to this issue. For example, one of exemplary enhancements introduced in the signaling diagram 300 was the AMF 205 providing GUAMI(s) and a list of S-NSSAI(s) supported by the AMF 205 to the NRF 220 in the registration request 405. In accordance with another exemplary enhancement introduced in the signaling diagram 400, the information obtained by the NRF 220 (e.g., the list of S-NSSAI supported by the AMF 205) may be provided to the NSACF 225 in the AMF discovery response. Since the NSACF 225 has this information, the NSACF may trigger the Nnsacf_NumberOfUEsPerSliceEACnotify operations to notify only the one or more AMFS that support the corresponding S-NSSAI.

In 615, the AMF 205 uses the EAC flag to decide when to trigger the number of UEs per network slice availability check and update procedure. This may reduce delays to the registration procedure and avoid negatively impacting already allowed network slices.

When the EAC flag indicates the EAC mode is to be activated, the AMF 205 may trigger the number of UEs per network slice availability check and update procedure before the registration accept step of the registration procedure or before the UE configuration update message. In other words, if it is likely that the quota for the network slice has been reached, the AMF 205 may perform the availability check before these messages are to be provided to the UE 110. When the EAC flag indicates the EAC mode is to be deactivated, the AMF 205 triggers the number of UEs per network slice availability check and update procedure after the registration accept step of the registration procedure or after the UE configuration update message.

In another aspect, the exemplary embodiments relate to the behavior of a NSACF within the context of a roaming scenario. Prior to discussing the exemplary embodiments an example of two different roaming scenarios are described below.

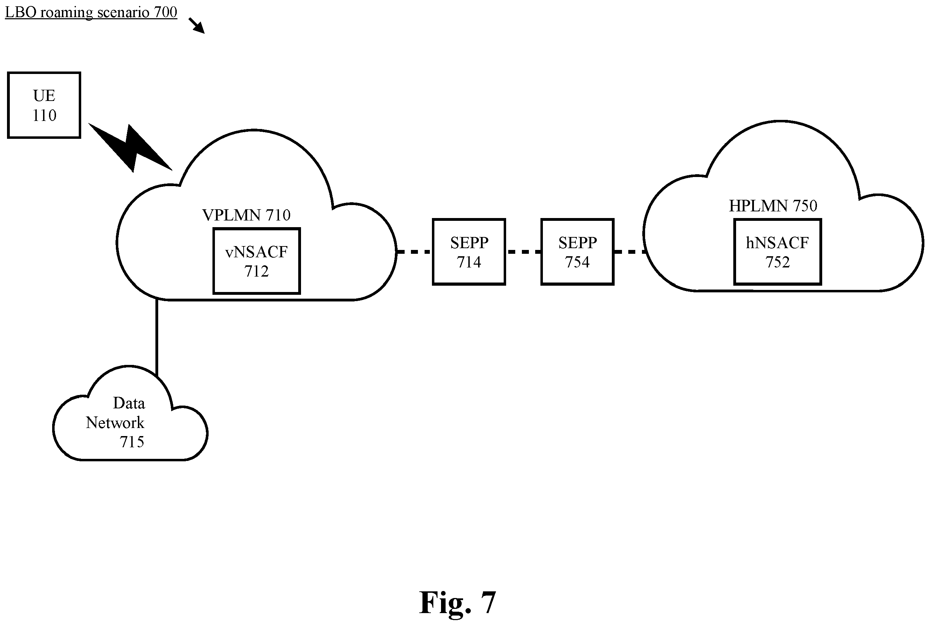

Fig. 7 shows an example of a local-breakout (LBO) roaming scenario 700. This example 700 includes the UE 110, a VPLMN 710, a HPLMN 750, a data network 715, a NSACF deployed by the VPLMN (vNSACF) 712, a NSACF deployed by the HPLM (hNSACF) 852, a security edge protection proxy (SEPP) 714 on the VPLMN side and a SEPP 754 on the HPLMN side. Those skilled in the art will understand that the SEPPs 714, 754 may act as a service relay between the VPLMN 710 and the HPLMN 750 for providing secured connection as well as hiding network topology.

In LBO, data traffic may be routed directly from the VPLMN 710 to the data network 715 while authentication and handling of subscription data is handled in the HPLMN 750. Here, the internet-protocol (IP) address of the data network 715 may be obtained by the UE 110 from the VPLMN 715.

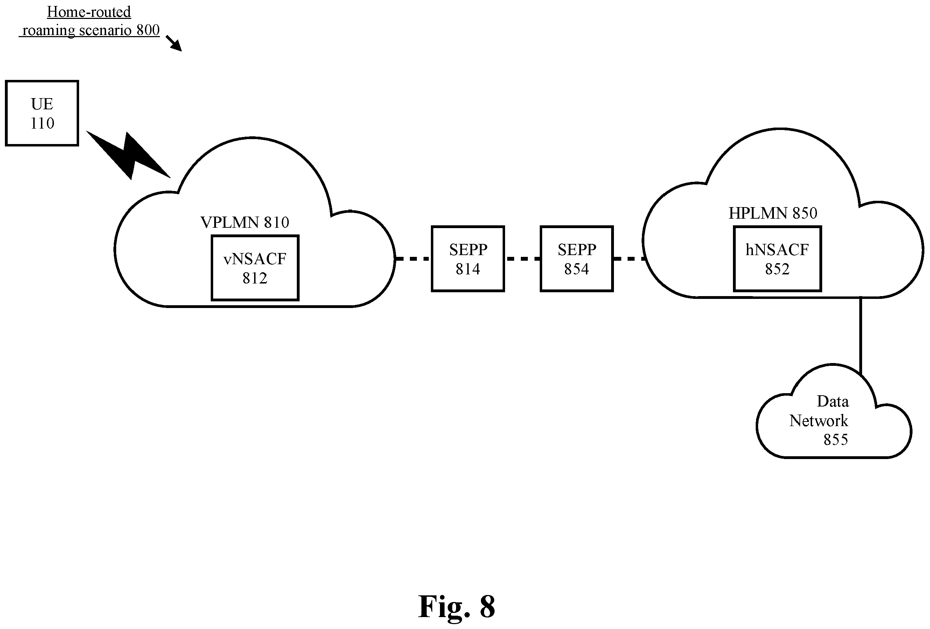

Fig. 8 shows an example of a home-routed roaming scenario 800. This example 800 includes the UE 110, a VPLMN 810, a HPLMN 850, a data network 855, a NSACF deployed by the VPLMN (vNSACF) 812, a NSACF deployed by the HPLMN (hNSACF) 852. A SEPP 814 on the VPLMN side and a SEPP 854 on the HPLMN side. Those skilled in the art will understand that the SEPPs 814, 854 may act as a service relay between the VPLMN 810 and the HPLMN 850 for providing secured connection as well as hiding network topology.

In the home-routed scenario, the VPLMN 810 data traffic is routed to the data network 855 via the HPLMN 850. This scenario provides an operator with more control with regard to offering roaming services, policy and charging to subscribers. Here, the IP address for the data network 855 may be obtained from the HPLMN 850.

In roaming scenarios, depending on the operator's policy, a roaming agreement or a service level agreement (SLA) between a VPLMN and a HPLMN, NSAC for roaming UEs may be performed by both the VPLMN and the HPLMN. For instance, a NSACF in the VPLMN may be configured by both the HPLMN and the VPLMN with a maximum number of roaming UEs per network slice what are allowed to be served by each network slice that is subject to NSAC. The NSACF in the VPLMN may perform NSAC for both the S-NSSAI in the VPLMN and the corresponding mapped S-NSAAI in the HPLMN.

To provide an example within the context of the LBO roaming scenario 700, for NSAC of roaming UEs (e.g., UE 110) managed by the VPLMN 710, a NSACF (e.g., vNSACF 712) may be configured with the maximum number of PDU sessions per network slice in LBO mode which are allowed to be served by each network slice that is subject to NSAC.

In the LBO roaming scenario 700, for maximum number of UEs per network slice admission control, the AMF may trigger a request to a NSACF in the serving PLMN (e.g., vNSACF 712) to perform network slice admission control. In this example, the NSACF in the HPLMN (e.g., hNSACF 752) may not be involved.

To provide an example, within the context of the home-routed roaming scenario 800, a NSACF (e.g., hNSACF 852) in the HPLMN 850 may be configured with a maximum number of PDU sessions per network slice and a NSACF (e.g., vNSACF 812) in the VPLMN 810 may be configured with a maximum number of PDU sessions per network slice in home-routed mode which are allowed to be served by each network slice that is subject to NSAC. Both NSACFs (e.g., hNSACF 852, vNSACF 812) may perform NSAC, where the vNSACF 812 performs NSAC for the S-NSSAI in the VPLMN 810 and the hNSACF 852 in the HPLMN 850 performs NSAC for the corresponding mapped S-NSSAI in the HPLMN.

In the home-routed roaming scenario 800, for a maximum number of PDU session per network slice admission control, the SMF of the VPLMN may trigger a request to the vNSACF 812 in the VPLMN 810. In addition, the SMF of the HPLMN 850 may trigger a request to the hNSACF 852 in the HPLMN 850 to perform a maximum number of PDU sessions admission control.

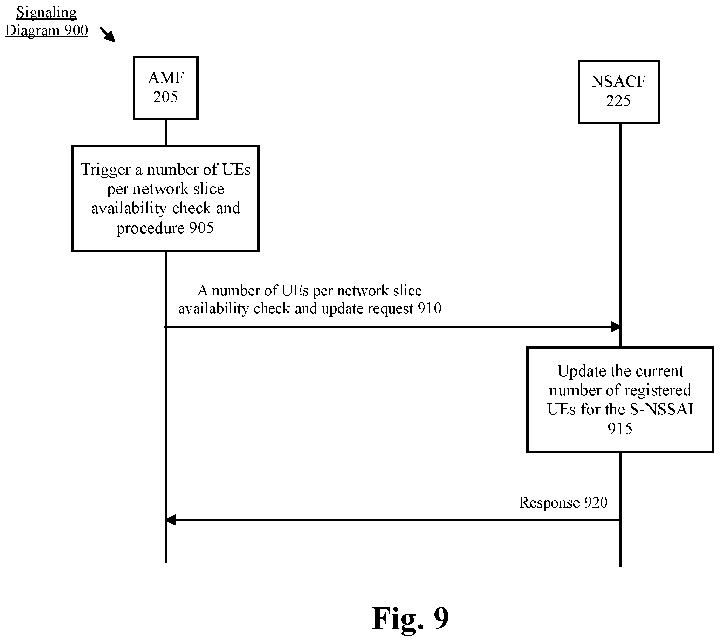

Fig. 9 shows a signaling diagram 900 for a number of UEs per network slice availability check and update procedure according to various exemplary embodiments. Initially, a general overview of the signaling diagram 900 will be provided with regard to the network architecture of Fig. 2. Thus, the signaling diagram 900 includes the AMF 205 and the NSACF 225. Subsequently, enhancements for network slice admission control support for roaming will be described with regard to the signaling diagram 900, the LBO roaming scenario 700 and the home-routed roaming scenario 800.

The number of UEs per network slice availability check and update procedure is to update (e.g., increase or decrease) the number of UEs registered with a S-NSSAI which is subject to NSAC. The AMF 205 may be configured with the information indicating which network slice is subject to NSAC.

In 905, the AMF 205 triggers the number of UEs per network slice availability check and update procedure to update the number of UEs registered with a network slice when a network slice subject to NSAC is included or removed from the allowed NSSAI for a UE.

In 910, the AMF 205 transmits a number of UEs per network slice availability check and update request to the NSACF 225. For example, this message may be referred to as a "Nnsacf_NumberOfUEsPerSliceAvailailityCheckandUpdate_Request" and include information such as, but not limited to, the UE ID, the S-NSSAI(s) for which the number of UEs registered per network slice update is required and the update flag which indicates whether the number of UEs registered per network slice update is to be increased or decreased.

In 915, the NSACF 225 updates the current number of registered UEs for the S-NSSAI. For example, the NSCAF 225 may increase or decrease number of UEs registered per network slice based on the information provided by the AMF 205 in the update flag parameter.

In 920, the NSACF 225 transmits a response to the request to the AMF 205. For example, this message may be referred to as a "Nnsacf_NumberOfUEsPerSliceAvailabilityCheckandUpdate_Response " and include information such as, but not limited to, the S-NSSAI(s) for which the maximum number of UEs per network slice has already been reached along with a result parameter indicating the maximum number of UEs registered with the network slice has been reached. If all the S-NSSAI the NSACF 225 returned to the AMF 205 have been reached, the AMF 205 may reject the request from the UE 110. Otherwise, the AMF 205 returns registration accept message in which the AMF 205 includes the rejected S-NSSAI(s) in the rejected NSSAI list.

For NSAC of roaming UEs, a maximum number of roaming UEs per network slice or a maximum number of PDU sessions per network slice in LBO mode or a maximum number of PDU sessions per network slice in home-routed mode is allocated to the VPLMN per SLA agreement and stored in one responsible vNSACF of the S-NSSAI. The maximum number of UEs registered with a network slice monitoring and enforcement is done in the VPLMN by the vNSACF. However, in 910 of the signaling diagram 900, the "Nnsacf_NumberOfUEsPerSliceAvailabilityCheckandUpdat_Request" service operation the AMF 205 may provide both the S-NSSAI in the VPLMN and the corresponding mapped S-NSSAI in HPLMN to the vNSACF. In 915, the vNSACF performs NSAC for the S-NSAAI in the VPLMN based on the SLA with the UE's HPLMN.

In the home-routed roaming scenario 800, the maximum number of PDU session per network slice monitoring and enforcement is done in both the VPLMN 810 by the vNSACF 812 and the HPLMN 850 by the hNSACF 852.

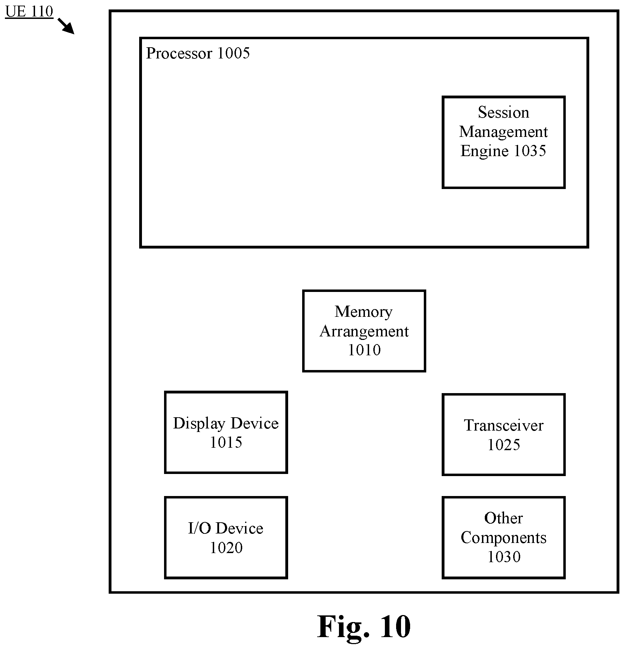

Fig. 10 shows an exemplary UE 110 according to various exemplary embodiments. The UE 110 will be described with regard to the network arrangement 100 of Fig. 1. The UE 110 may include a processor 1005, a memory arrangement 1010, a display device 1015, an input/output (I/O) device 1020, a transceiver 1025 and other components 130. The other components 1030 may include, for example, an audio input device, an audio output device, a power supply, a data acquisition device, ports to electrically connect the UE 110 to other electronic devices, etc.

The processor 1005 may be configured to execute a plurality of engines of the UE 110. For example, the engines may include a session management engine 1035. The session management engine 1035 may perform various operations related to establishing and maintaining a PDU session.

The above referenced engine 1035 being an application (e.g., a program) executed by the processor 205 is merely provided for illustrative purposes. The functionality associated with the engine 235 may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UEs, the functionality described for the processor 1005 is split among two or more processors such as a baseband processor and an applications processor. The exemplary embodiments may be implemented in any of these or other configurations of a UE.

The memory arrangement 1010 may be a hardware component configured to store data related to operations performed by the UE 110. The display device 1015 may be a hardware component configured to show data to a user while the I/O device 1020 may be a hardware component that enables the user to enter inputs. The display device 1015 and the I/O device 1020 may be separate components or integrated together such as a touchscreen. The transceiver 1025 may be a hardware component configured to establish a connection with the 5G NR-RAN 120 and/or any other appropriate type of network. Accordingly, the transceiver 1025 may operate on a variety of different frequencies or channels (e.g., set of consecutive frequencies).

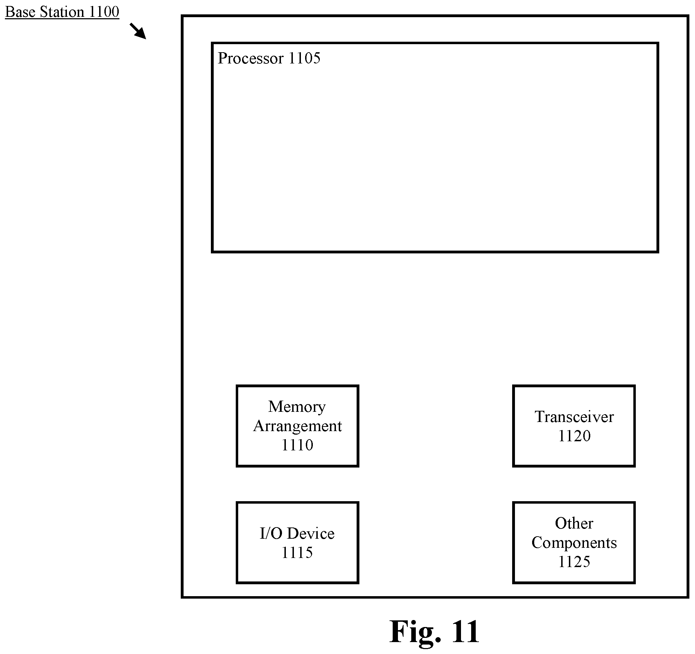

Fig. 11 shows an exemplary base station 1100 according to various exemplary embodiments. The base station 1100 may represent any access node (e.g., gNB 120Ae, etc.) through which the UE 110 may establish a connection and manage network operations.

The base station 1100 may include a processor 1105, a memory arrangement 1110, an input/output (I/O) device 1115, a transceiver 1120, and other components 1125. The other components 1125 may include, for example, a battery, a data acquisition device, ports to electrically connect the base station 1100 to other electronic devices, etc.

The processor 1105 may be configured to execute a plurality of engines of the base station 1100. However, reference to a processor 1105 is only exemplary. The functionality associated with the engines may also be represented as a separate incorporated component of the base station 1100 or may be a modular component coupled to the base station 1100, e.g., an integrated circuit with or without firmware. For example, the integrated circuit may include input circuitry to receive signals and processing circuitry to process the signals and other information. In addition, in some base stations, the functionality described for the processor 305 is split among a plurality of processors (e.g., a baseband processor, an applications processor, etc.). The exemplary embodiments may be implemented in any of these or other configurations of a base station.

The memory 1110 may be a hardware component configured to store data related to operations performed by the base station 1100. The I/O device 1115 may be a hardware component or ports that enable a user to interact with the base station 1100. The transceiver 1120 may be a hardware component configured to exchange data with the UE 110 and any other UE in the system 100. The transceiver 1120 may operate on a variety of different frequencies or channels (e.g., set of consecutive frequencies). Therefore, the transceiver 1120 may include one or more components (e.g., radios) to enable the data exchange with the various networks and UEs.

### Examples

In a first example, a network slice admission control function (NSACF) of a 5G core network is configured to perform operations comprising maintaining a network slice quota for one or more network slices, wherein the network function is a network slice admission control function (NSACF) configured to enforce network slice admission control (NSAC) for both a visiting public land mobile network (VPLMN) and a home public land mobile network (HPLMN), receiving a number of registered user equipment (UEs) per network slice availability check and update request from an access and mobility management function (AMF) and transmitting a response to the AMF, the response indicating whether a maximum number of registered UEs or sessions for the S-NSSAI has been reached.

In a second example, the NSACF of the first example, wherein the operations further comprise receiving a maximum number of roaming UEs per network slice for a single network slice selection assistance information (S-NSSAI) in a visiting public land mobile network (VPLMN) and receiving a maximum number of roaming UEs per network slice for a corresponding mapped S-NSAAI in a home public land mobile network (HPLMN).

In a third example, the NSACF of the first example, wherein the network function is a network slice admission control function (NSACF) deployed by a visiting public land mobile network (VPLMN) that is configured with a maximum number of packet data unit (PDU) sessions per network slice in local-breakout mode (LBO).

In a fourth example, the NSACF of the first example, wherein the network function is a network slice admission control function (NSACF) deployed by a visiting public land mobile network (VPLMN) that is configured with a maximum number of packet data unit (PDU) sessions per network slice in home-routed mode.

In a fifth example, the NSACF of the fourth example, wherein the NSACF deployed by the VPLMN is configured to enforce network slice admission control (NSAC) for a single network slice selection assistance information (S-NSSAI) and a NSACF deployed by a home public land mobile network (HPLMN) is configured to enforce NSAC for a corresponding mapped S-NSSAI.

In a sixth example, the NSACF of the first example, wherein the network function is a network slice admission control function (NSACF) deployed by a visiting public land mobile network (VPLMN) and the request is received from a session management function (SMF) deployed by the VPLMN.

In a seventh example, the NSACF of the first example, wherein the quota comprises a maximum number of packet data unit (PDU) sessions per network slice in local-break out (LBO) mode.

In an eighth example, the NSACF of the first example, wherein the quota comprises a maximum number of packet data unit (PDU) sessions per network slice in home-routed mode.

In a ninth example, the NSACF of the first example, wherein the network function is a network slice admission control function (NSACF) deployed by a visiting public land mobile network (VPLMN).

In a tenth example, the NSACF of the ninth example, wherein the request comprises a single network slice selection assistance information (S-NSSAI) in the VPLMN and a corresponding mapped S-NSSAI in a home public land mobile network (HPLMN).

In an eleventh second example, the NSACF of the tenth example, wherein the NSACF is configured to perform network slice admission control (NSAC) for a single network slice selection assistance information (S-NSSAI) in the VPLMN based on an agreement between the VPLMN and a home public land mobile network (HPLMN).

In a twelfth example, a method performed by a network slice admission control function (NSACF) of a 5G core network comprises maintaining a network slice quota for one or more network slices, wherein a network slice admission control function (NSACF) configured to enforce network slice admission control (NSAC) for both a visiting public land mobile network (VPLMN) and a home public land mobile network (HPLMN), receiving a number of registered user equipment (UEs) per network slice availability check and update request from an access and mobility management function (AMF) and transmitting a response to the AMF, the response indicating whether a maximum number of registered UEs or sessions for the S-NSSAI has been reached.

In a thirteenth example, the method the twelfth example, wherein the operations further comprise receiving a maximum number of roaming UEs per network slice for a single network slice selection assistance information (S-NSSAI) in a visiting public land mobile network (VPLMN) and receiving a maximum number of roaming UEs per network slice for a corresponding mapped S-NSAAI in a home public land mobile network (HPLMN).

In a fourteenth example, the method the twelfth example, wherein the network function is a network slice admission control function (NSACF) deployed by a visiting public land mobile network (VPLMN) that is configured with a maximum number of packet data unit (PDU) sessions per network slice in local-breakout mode (LBO).

In a fifteenth example, the method the twelfth example, wherein the network function is a network slice admission control function (NSACF) deployed by a visiting public land mobile network (VPLMN) that is configured with a maximum number of packet data unit (PDU) sessions per network slice in home-routed mode.

In a sixteenth example, the method the fifteenth example, wherein the NSACF deployed by the VPLMN is configured to enforce network slice admission control (NSAC) for a single network slice selection assistance information (S-NSSAI) and a NSACF deployed by a home public land mobile network (HPLMN) is configured to enforce NSAC for a corresponding mapped S-NSSAI.

In a seventeenth example, the method the twelfth example, wherein the network function is a network slice admission control function (NSACF) deployed by a visiting public land mobile network (VPLMN) and the request is received from a session management function (SMF) deployed by the VPLMN.

In an eighteenth example, the method the twelfth example, wherein the quota comprises a maximum number of packet data unit (PDU) sessions per network slice in local-break out (LBO) mode.

In a nineteenth example, the method the twelfth example, wherein the quota comprises a maximum number of packet data unit (PDU) sessions per network slice in home-routed mode.

In a twentieth example, the method the twelfth example, wherein the network function is a network slice admission control function (NSACF) deployed by a visiting public land mobile network (VPLMN).

In a twenty first example, the method the twentieth example, wherein the request comprises a single network slice selection assistance information (S-NSSAI) in the VPLMN and a corresponding mapped S-NSSAI in a home public land mobile network (HPLMN).

In a twenty second example, the method the twenty first example, the NSACF of the tenth example, wherein the NSACF is configured to perform network slice admission control (NSAC) for a single network slice selection assistance information (S-NSSAI) in the VPLMN based on an agreement between the VPLMN and a home public land mobile network (HPLMN).

In a twenty third example, a method is performed by a network slice admission control function (NSACF) of a 5G core network, the method comprising transmitting a network function registration request to a network resource function (NRF), wherein the network function registration request includes a list of single network slice selection assistance information (S-NSSAI) for which the NSACF manages admission control and receiving a response to the network function registration request from the NRF, wherein the NSACF is a consumer of Nnrf_NFManagement services.

In a twenty fourth example, the method of the twenty third example, wherein the network function registration request further comprises a number of registered user equipments (UEs) supported by a first one of the S-NSSAI.

In a twenty fifth example, the method of the twenty third example, wherein the network function registration request further comprises a number of protocol data unit (PDU) sessions supported by a first one of the S-NSSAI.

In a twenty sixth example, the method of the twenty third example, wherein the network function registration request further comprises a service area for the NSACF.

In a twenty seventh example, the method of the twenty third example, further comprising identifying that a number of registered user equipment (UEs) for a S-NSSAI crosses a threshold value, identifying one or more AMFs associated with the S-NSSAI based on the discovery response and transmitting an early admission control (EAC) flag to only the identified AMFs in response to the number of registered UEs for the S-NSSAI crossing the threshold value.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. The exemplary embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

It will be apparent to those skilled in the art that various modifications may be made in the present disclosure, without departing from the spirit or the scope of the disclosure. Thus, it is intended that the present disclosure cover modifications and variations of this disclosure provided they come within the scope of the appended claims and their equivalent.

## Claims

1. An access and mobility management function (AMF) of a 5G core network configured to perform operations comprising:
transmitting a network function registration request to a network resource function (NRF);
receiving a response to the network function registration request from the NRF;
transmitting a network function discovery request to the NRF, the network function discovery request including one or more single network slice selection assistance information (S-NSSAI) and an indication that the discovery request is for a network slice admission control function (NSACF); and
receiving a network function discovery response from the NRF, wherein the network function discovery response includes a NSACF address.

2. The AMF of claim 1, wherein the network function registration request includes a list of S-NSSAI supported by the AMF.

3. The AMF of any of claims 1 or 2, wherein the network function discovery response includes a list of S-NSSAI for which the NSACF manages admission control.

4. The AMF of claim 3, the operations further comprising:
receiving a registration request from a user equipment (UE), wherein the registration request is received after the network function discovery response and corresponds to one or more S-NSSAI that were not included in the network function discovery request transmitted to the NSACF; and
determining that the NSACF manages admission control for the S-NSSAI based on the list of S-NSSAI included in the network function discovery response.

5. The AMF of claim 4, the operations further comprising:
sending, to the NSACF, an update request to indicate the NSACF should increment a count of UEs corresponding to each of the one or more S-NSSAI corresponding to the registration request by the UE; and
receiving, from the NSACF, an update response to the update request.

6. The AMF of claim 5, the operations further comprising:
when the update response indicates that all of the one or more S-NSSAI corresponding to the registration request by the UE have reached a maximum number of UEs, sending a registration reject message to the UE.

7. The AMF of claim 5, the operations further comprising:
when the update response indicates that a first one of the one or more S-NSSAI corresponding to the registration request by the UE have reached a maximum number of UEs and a second one of the one or more S-NSSAI corresponding to the registration request has not reached a maximum number of UEs, sending a registration accept message to the UE, wherein the registration accept message include an identification of the first one of the one or more S-NSSAI that has reached the maximum number of UEs.

8. A network slice admission control function (NSACF) of a 5G core network configured to perform operations comprising:
transmitting a network function registration request to a network resource function (NRF), wherein the network function registration request includes a list of single network slice selection assistance information (S-NSSAI) for which the NSACF manages admission control; and
receiving a response to the network function registration request from the NRF, wherein the NSACF is a consumer of Nnrf_NFManagement services.

9. The NSACF of claim 8, wherein the network function registration request further comprises a number of registered user equipments (UEs) supported by a first one of the S-NSSAI.

10. The NSACF of any of claims 8 or 9, wherein the network function registration request further comprises a number of protocol data unit (PDU) sessions supported by a first one of the S-NSSAI.

11. The NSACF of any of claims 8 to 10, wherein the network function registration request further comprises a service area for the NSACF.

12. The NSACF of any of claims 8 to 11, the operations further comprising:
identifying that a number of registered user equipment (UEs) for a S-NSSAI crosses a threshold value;
identifying one or more AMFs associated with the S-NSSAI based on the discovery response; and
transmitting an early admission control (EAC) flag to only the identified AMFs in response to the number of registered UEs for the S-NSSAI crossing the threshold value.
